(19) Europäisches Patentamt
European Patent Office
Office européen des brevets

(11) **EP 2 479 560 A1**

(12) **EUROPEAN PATENT APPLICATION**
published in accordance with Art. 153(4) EPC

(43) Date of publication:
**25.07.2012 Bulletin 2012/30**

(21) Application number: **10817282.6**

(22) Date of filing: **17.09.2010**

(51) Int Cl.:
**G01N 27/26** (2006.01)   **G01N 27/28** (2006.01)
**G01N 27/416** (2006.01)   **G01N 35/04** (2006.01)

(86) International application number:
**PCT/JP2010/066198**

(87) International publication number:
**WO 2011/034169 (24.03.2011 Gazette 2011/12)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **18.09.2009 JP 2009217587**

(71) Applicant: **Hitachi Chemical Company, Ltd.
Tokyo 163-0449 (JP)**

(72) Inventors:
• **SAKAI Chiki
Tokyo 140-0002 (JP)**
• **NOZAWA Osamu
Tokyo 140-0002 (JP)**
• **MITSUMAKI Hiroshi
Tokyo 140-0002 (JP)**

(74) Representative: **HOFFMANN EITLE
Patent- und Rechtsanwälte
Arabellastraße 4
81925 München (DE)**

(54) **AUTOMATIC ANALYZING DEVICE**

(57) Ion concentration measurement requires a calibration before the start of the measurement, and thus the start of the measurement is delayed for the calibration period. Hence, the calibration is made unnecessary by reading an electrode slope value specific to an ion selective electrode for measuring the concentration of particular ions dissolved in a test solution, from an information presenting unit of an ion selective electrode cartridge including the ion selective electrode.

FIG. 1

**Description**

TECHNICAL FIELD

The present invention relates to an automatic analyzer capable of measuring a concentration of particular ions in a test solution.

BACKGROUND ART

Conventionally, ion selective electrodes have been used for measuring concentrations (or activities) of particular ions in a test solution.

The types of the ion selective electrodes are mainly categorized into a solid film type, a glass film type, and a neutral carrier type. Among these, the neutral carrier type electrode is also called a liquid film type electrode. This ion selection electrode generates an electromotive force in accordance with the Nernst equation shown below.

$$E = Eo + (RT/nF)logCx \quad \ldots (Formula\ 1)$$

Herein, Eo is a standard electrode potential, R is the Avogadru constant, T is an absolute temperature, n is (the number of) charges of ions to be measured, F is the Faraday constant, and Cx is a concentration of the ions to be measured.

A term (RT/nF) in the Nernst equation indicates a sensitivity of each electrode and is generally referred to as an electrode slope. Theoretically, the electrode slope is calculated to be 59 mv/dec at an absolute temperature of 300 degrees C (a measurement temperature of 27 degrees C). If an electrode film does not have a failure, the electrode slope is almost constant in a certain time period. However, to be precisely, values of the electrode slope are specific to respective electrodes. The electrode slope becomes considerably lower than its theoretical value in some cases, and thus is generally used for determining a working life of an electrode. For this reason, in order to avoid an influence of the electrode working life to measure ion concentration accurately, a conventional automatic ion concentration measurement device performs a step of checking an electrode slope, that is, a step generally referred to as a calibration before the start of measurement of a test solution. The calibration uses two types of calibration solutions having known concentrations which are a high concentration and a low concentration and measures an electromotive force (a potential difference generated between an electrode and a reference electrode in the measurement device) in each concentration. By using a value of each measurement, the electrode slope is determined from the Nernst equation. Generally, at least once a day before the start of the test solution measurement, an automatic ion concentration analyzer performs so-called a 2-point calibration by using the two types of calibration solutions having known concentrations, that is, the high-concentration solution and the low-concentration solution.

When supply of the calibration solutions is insufficient or when removal of the calibration solutions or cleaning after execution of the calibration is insufficient, subsequently performed measurement might be influenced. In this case, a resultant measurement anomaly prevents the calibration from being performed properly or results in an erroneous measurement. Thus, various methods for detecting an anomaly value have been proposed (see Patent Document 1 or Patent Document 2, for example). In addition, methods for preventing occurrence of an anomaly have also been proposed (see Patent Document 3 or Patent Document 4, for example).

PRIOR ART DOCUMENTS

PATENT DOCUMENTS

PATENT DOCUMENT 1: Japanese Patent Application Publication No. Hei 2-159548
PATENT DOCUMENT 2: Japanese Patent Application Publication No. 2004-251799
PATENT DOCUMENT 3: Japanese Patent Application Publication No. 2001-264283
PATENT DOCUMENT 4: Japanese Patent Application Publication No. 2008-051620

SUMMARY OF THE INVENTION

PROBLEMS TO BE SOLVED BY THE INVENTION

In each of the above cases, however, a device which requires the calibration every day requires a certain time to execute the calibration, and thus the start of ion concentration measurement is delayed for the certain time. Further, the calibration requires reagents (such as a calibration solution) dedicated for the calibration, and thus cost increase due to the reagents largely burdens those in charge of inspection. In addition, maintenance and replacement work for consumable parts such as a reagent supply pump require labor and costs. Thus, reduction of calibration execution times is demanded.

Hence, an object of the present invention is to provide an automatic ion concentration analyzer includes an ion selective electrode cassette cartridge in which a calibration such as a 2-point calibration in an does not have to be executed within an expected usable period or times (a working life period of an electrode).

MEANS FOR SOLVING THE PROBLEMS

As the result of earnest studies, the inventors of the present invention have found that the aforementioned problems can be solved by directly reading an electrode slope value of an ion selective electrode from an information presenting unit of an ion selective electrode cartridge, and have come to make the present invention.

Specifically, the present invention provides an automatic analyzer configured to read information on an electrode slope specific to an at least one ion selective electrode from an information presenting unit of an ion selective electrode cartridge including the ion selective electrode arranged therein and thereby to use the information for measuring the concentration of particular ions in a test solution infused in a predetermined portion of the ion selective electrode cartridge.

EFFECT OF THE INVENTION

According to the present invention, measurement of an ion concentration can be started after directly reading an electrode slope value specific to an ion selective electrode included in an ion selective electrode cartridge to be used.

BRIEF DESCRIPTION OF THE DRAWINGS

Fig. 1 is a diagram showing an overall configuration example of an automatic analyzer according to an embodiment.
Fig. 2 is a diagram for explaining control system blocks used in the automatic analyzer.
Fig. 3 is a graph for explaining a principle of correcting a measured concentration using a reference solution.
Fig. 4 is a diagram for explaining control system blocks used in an ion selective electrode unit.
Fig. 5 is a diagram for explaining an exterior structure of an ion selective electrode measuring unit.
Fig. 6 is a diagram for explaining an exterior example of an ion selective electrode cartridge.
Fig. 7 is a graph showing a slope example of an electrode for sodium ions.
Fig. 8 is a diagram of a reagent cartridge viewed from above obliquely.
Fig. 9 is a diagram of the reagent cartridge viewed from a back side thereof.
Fig. 10 is a diagram for explaining a measurement operation flow.

MODES FOR CARRYING OUT THE INVENTION

(Automatic Analyzer)

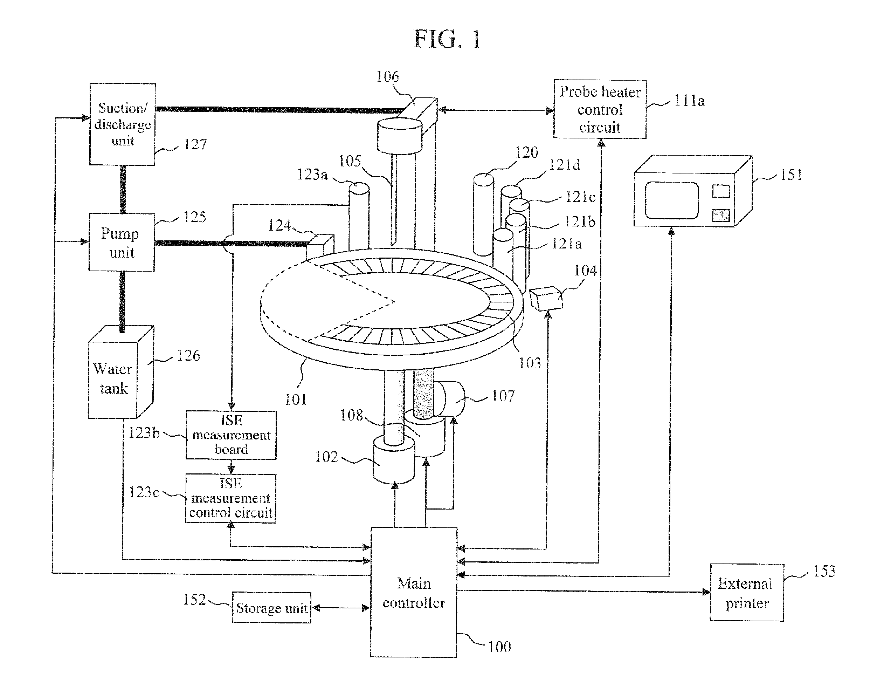

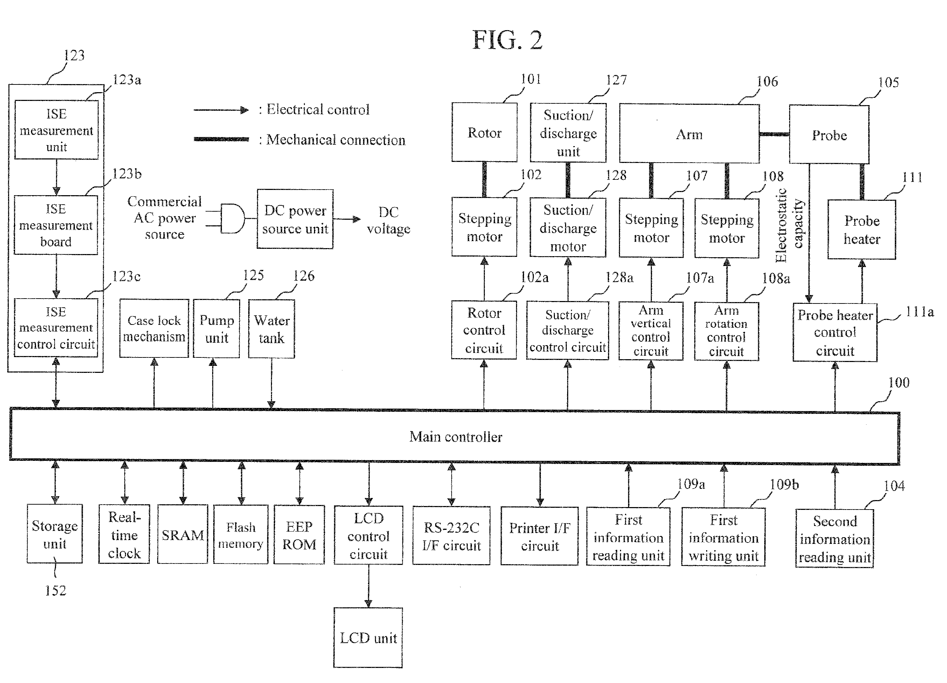

An automatic analyzer of the present invention will be described in detail by using the drawings. Fig. 1 shows an overall configuration example of an automatic analyzer used in an embodiment. In addition, Fig. 2 shows a configuration example of control system blocks of the automatic analyzer.

The automatic analyzer includes a main controller 100 configured to control operations of units of the analyzer. The main controller 100 mainly includes a CPU, a ROM, a RAM, and a real-time clock. The ROM is used as a storage area for a control program and the like of the automatic analyzer, and the RAM is used as a temporary storage area. The main controller 100 corresponds to a "controller" in the scope of claims.

The automatic analyzer includes a single probe 105 configured to suck a liquid from any of containers located within a movable range of the probe 105 or to discharge a liquid to the container. The containers herein include: sample containers which hold test solutions; reagent cartridges which hold reagents used for analyzing ion concentrations; a container for infusing a test solution and the like, which is provided in an ion selective electrode cartridge used for measuring concentrations of particular ions; and the like.

The sample containers are held in sample container holders 121a, 121b, 121c, and 121d; the reagent cartridges are held in reagent cartridge holders 103 arranged in a rotor 101; and the ion selective electrode cartridge is held in an electrode cartridge holder.

The probe 105 is driven by a probe driving unit. The structure of the probe driving unit is not limited to a particular structure, as long as the probe 105 can be transported in the analyzer. In this embodiment, the probe driving unit includes an arm 106, stepping motors 107, 108, an arm vertical control circuit 107a, and an arm rotation control circuit 108a.

The arm 106 is a member extending in a horizontal direction and includes the probe 105 attached to one end portion of the arm 106. In attaching the probe 105, an axis of the probe 105 is arranged in such a manner as to extend in a vertical direction. The other end portion of the arm 105 is attached to an arm driving shaft. The arm driving shaft is driven in an up-down direction (vertical direction) by the stepping motor 107 provided for vertical movement control and is rotationally driven on a horizontal plane by the stepping motor 108 provided for rotation control. The movement of the stepping motor 107 is controlled by the arm vertical control circuit 107a, while the movement of the stepping motor 108 is controlled by the arm rotation control circuit 108a.

Since the aforementioned configuration is employed, the probe 105 in this embodiment is driven in the up-down direction or the rotation direction in the automatic analyzer while accompanying an up-down movement and a rotational movement of the arm driving shaft. Note that the arm driving shaft serves as a rotation axis of the probe 105 and the length of the arm 106 serves as a radius of rotation of the probe 105. The movements of the arm vertical control circuit 107a and the arm rotation control circuit 108a are also controlled by the main controller 100. Note that the main controller 100 controls not only positioning of the probe 105 but also infusing, sucking, and discarding of various solutions including a test solution which are performed by using the probe 105. In this embodiment, a suction/discharge unit 127, a suction/discharge motor 128, and a suction/discharge control circuit 128a are used for controlling the sucking and discharging (used for infusing and discarding) of the solutions. Note that the probe 105 is accommodated in a housing 120 when not in use.

The automatic analyzer includes the rotor 101 as a transportation mechanism for the reagent cartridges. In the embodiment, the rotor 101 has a disc shape, and 40 reagent cartridge holders 103 (recessed portions capable of holding the reagent cartridges in such a manner that the reagent cartridges are fitted thereinto) are formed at regular intervals in an outer circumferential portion of the rotor 101.

The rotor 101 is driven and controlled by a rotor driving unit. The structure of the rotor driving unit is not limited to a particular structure, either, as long as the rotor driving unit has a structure in which the rotor can be driven in the device. In this embodiment, the rotor driving unit includes a stepping motor 102 and a rotor control circuit 102a. The stepping motor 102 is capable of rotationally driving the rotor 101 clockwise and counterclockwise around a rotation axis thereof. The rotational driving of the rotor 101 causes any of the reagent cartridges to be transported to a desired position in a transportation range of the probe 105. Note that the stepping motor 102 is controlled by the rotor control circuit 102a, and the rotor control circuit 102a is controlled by the main controller 100.

Besides the above, the aforementioned sample container holders 121a to 121d are arranged in the movable range of the probe 105. Each of the sample container holders 121a to 121d is assigned location information so that the main controller 100 can identify the location thereof. Each of the sample container holders 121a to 121d detachably holds any one of the sample containers.

Further, the electrode cartridge holder holding the ion selective electrode cartridge is arranged in the movable range of the probe 105. In this embodiment, the electrode cartridge holder is referred to as an ion selective electrode measurement unit 123a. Note that in this embodiment, an overall system including the ion selective electrode measurement unit 123a, an ion selective electrode measurement board 123b, and an ion selective electrode measurement control circuit 123c is referred to as an ion selective electrode unit 123. A detailed structure of the ion selective electrode unit 123 will be described later.

An ion selective electrode cartridge is attached to the ion selective electrode measurement unit 123a as the electrode cartridge holder. The ion selective electrode cartridge is preferably a storage-type cartridge including a container for infusing a test solution and the like, a reference electrode arranged around the container, and at least one ion selective electrode also arranged around the container. Further, the ion selective electrode cartridge includes an information presenting unit attached thereto, the information presenting unit storing at least an electrode slope value Slope specific to the ion selective electrode. The information presenting unit herein corresponds to a "first information presenting unit" in the scope of claims. Note that the electrode slope value Slope is a value representing a correspondence between an ion concentration and electrode output, that is, a slope of a relational expression (a log-linear equation) between the ion concentration and an electromotive force.

Meanwhile, the automatic analyzer is provided with a first information reading unit 109a capable of reading stored information from the information presenting unit. The first information reading unit 109a corresponds to a "first information reading unit" in the scope of claims. The first information reading unit 109a reads the electrode slope value Slope in the ion selective electrode, and thereby the automatic analyzer according to the embodiment can start ion concentration measurement without executing a calibration.

This embodiment assumes a case where, within a guaranteed working life of the ion selective electrode, the electrode slope value Slope of the ion selective electrode does not change or change, if any, is very small. However, when higher accuracy measurement is required, such a mechanism as shown below is desirably prepared. Specifically, a characteristic of change of the electrode slope value Slope in the guaranteed working life is stored in the information presenting unit of the ion selective electrode cartridge. For example, a percentage change of the electrode slope value Slope and change timing of the percentage change can also be stored in the information presenting unit. If the change characteristic of the electrode slope value Slope is stored in the information presenting unit, the automatic analyzer can correct the electrode slope value Slope every predetermined number of measurements by using the percentage change. Thereby, the automatic analyzer can automatically correct the electrode slope value Slope used in the ion concentration measurement to a correct value and can keep the measurement accuracy in a high accuracy state for a long time.

As long as the information presenting unit can store the information, the information presenting unit can have any structure. For example, the information presenting unit may be a one-dimensional barcode, a two-dimensional barcode or a read only semiconductor memory. Meanwhile, a reading device employing a reading method matching the information presenting unit, for example, an optical method or an electromagnetic method, is used as the first information reading unit 109a. Information thus read is stored in any storage unit in the automatic analyzer. In the case of Fig. 1, the information is stored in a storage unit 152 connected to the main controller 100. The storage unit 152 stores not only the information read from the information presenting unit but also an ion concentration measurement result, together with a specimen ID and the measurement date and time. The specimen ID is inputted in advance manually or through a barcode reader, an IC tag reader or the like. The storage unit 152 also stores a measurement result obtained in the past. The storage unit 152 corresponds to a "storage unit" in the scope of claims.

Besides the above, the automatic analyzer is provided with: a detector configured to detect an electromotive force appearing between an ion selective electrode for particular ions and the reference electrode after a test solution is infused in a predetermined portion of the ion selective electrode cartridge; and an information processing unit configured to make a calculation using the electromotive force detected by the detector and a corresponding electrode slope value Slope. The detector herein corresponds to the ion selective electrode measurement board 123b and some circuit part of the ion selective electrode measurement control circuit 123c which are described above. In addition, the information processing unit corresponds to some circuit part of the ion selective electrode measurement control circuit 123c and the main controller 100. The detector and the information processing unit correspond to a "detector" and an "information processing unit" in the scope of claims, respectively. Note that the controller, the storage unit, and the information processing unit which are described above can form a single information processing apparatus such as a PC.

The information processing unit calculates the concentration of particular ions without executing a calibration, by using the electrode slope value Slope specific to the ion selective electrode which is directly read from the ion selective electrode cartridge by using the first information reading unit 109a.

Note that the ion concentration measurement requires parameter considerations other than the electrode slope value Slope. Specifically, an intercept variation in applying an electrode slope value Slope to a measured electromotive force is taken into consideration.

The concentration of particular ions in a test solution (sample) is normally determined from the electrode slope value Slope and a difference between an electromotive force measured at every measurement by use of the reference solution having a known concentration of the particular ions and an electromotive force obtained in measuring the sample. Also in the case of measuring the particular ion concentration by use of the ion selective electrode cartridge, a measurement error due to so-called an intercept variation due to occurrence of a drift of an electrode electromotive force can be eliminated by using: the reference solution at every measurement; and the electrode slope value Slope stored in the storage means 152. This embodiment provides a method for correcting a variation of an intercept specific to the ion selective electrode cartridge by using a reference solution having a known concentration value of particular ions at every measurement. The method is provided to eliminate the measurement error due to so-called an intercept variation due to occurrence of a drift of an electrode electromotive force. The particular ion concentration is calculated by using the electrode slope value and the electromotive force difference between the reference solution and the test solution (sample) after the intercept obtained by measuring the reference solution is corrected.

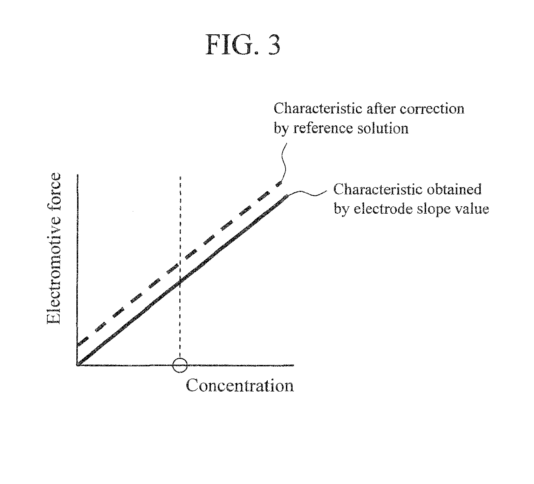

A principle of the correction using the reference solution is described by using Fig. 3. A circle shows the concentration of the reference solution in the graph. When an electromotive force corresponding to the known concentration is known as described above, it is possible to make clear an existing difference between the electromotive force in the test solution (sample) and the electromotive force in the concentration of particular ions (shown by a dashed line in the graph). Note that the concentration of the reference solution is desirably set at a median of a distribution range of the ion concentration of particular ions such as $Na^+$, $K^+$, or $Cl^-$, for example, in a serum sample.

With the use of the median, a measurement error can be minimized even in a case where a function of correcting change of the slope (a value of an electrode slope value Slope) of the electrode slope within the working life is not provided.

The description of units provided or suitable for being provided to the automatic analyzer is continued.

Firstly, a description is given of other information suitable for being stored in the information presenting unit. It is desirable to additionally store information on, for example, the working life (such as the maximum value of usable times, the maximum value of usable days or a use limit, for example) in the information presenting unit. If the information on the working life is stored therein, the automatic analyzer can directly read the information by using the first information reading unit 109a.

In this case, the automatic analyzer is desirably provided with a computing unit configured to count use times or use days of the ion selective electrode cartridge every time the test solution is infused in the predetermined portion (container) of the ion selective electrode cartridge. The computing unit corresponds to a "computing unit" in the scope of claims. The computing unit together with the aforementioned controller, the storage unit, and the information processing unit can form the single information processing apparatus such as a PC. At the same time, a signal processor such as the computing unit and the main controller 100 is desirably provided with a function of determining whether or not the ion selective electrode cartridge can be used for the ion concentration measurement by comparing the information on the working life read from the ion selective electrode cartridge with the use times or the use days. Providing the function enables, for example, control by which concentration measurement using an ion selective electrode cartridge already having reached an end of the working life is forcedly terminated or control by which the user is notified that the ion selective electrode cartridge is to be replaced.

Note that the computing unit may be provided with a function of storing the use start date and time of the ion selective electrode cartridge in the storage unit 152. In this case, the computing unit may be configured to determine whether or not the ion selective electrode cartridge can be used on the basis of whether or not the current date and time is later than a date and time identified after adding the maximum value of the usable days to the use start date and time, for example. The ion selective electrode measurement control circuit 123c and the main controller 100 in Fig. 1 correspond to the computing unit.

Further, in a case where the information presenting unit is a readable and writable storage medium (for example, an IC tag), the computing unit desirably writes all, any ones or any one of the use start date, the use times, and the use days to the storage medium through a first information writing unit 109b. The first information writing unit 109b herein corresponds to a "first information writing unit" in the scope of claims. As described above, the information such as the use start date can be stored in the information presenting unit. In this case, even if the ion selective electrode cartridge is attached to another automatic analyzer due to a failure of the currently used automatic analyzer, management of the working life of the attached ion selective electrode cartridge can be continued on the side of the automatic analyzer to which the cartridge is newly attached. Note that the aforementioned information processing unit may have a function of issuing a processing command to the first information writing unit 109b.

Besides the above, the automatic analyzer is desirably provided with an information reading unit 104 (corresponding to a "second information reading unit" in the scope of claims) capable of reading information from the information presenting unit (corresponding to the "second information presenting unit" in the scope of claims) included in the corresponding reagent cartridge attached to the rotor 101.

The information presenting unit desirably stores, for example, the lot number, the manufacturing date, the use limit, operation procedures, a concentration value of the reference solution, and the like. The reference solution herein is a solution used in correcting the relation between an electromotive force value detected by the detector and an intercept of an ion concentration. However, when it is ensured that the concentration of the reference solution is always the same as a value held on the detector side, the concentration value does not have to be stored. In this embodiment, the concentration of the reference solution is stored in the information presenting unit of the reagent cartridge.

A storage medium such as a one-dimensional barcode, a two-dimensional barcode or an IC tag, for example is also used as the information presenting unit described herein. A reading device suitable for an information storage format used for the information presenting unit is used as the information reading unit 104. For example, a device configured to read information by the optical method or the electromagnetic method is used as the information reading unit. The information reading unit 104 provides the main controller 10 with the thus read information. The main controller 100 controls the movement of the probe 105 in accordance with the operation procedures read from the information presenting unit. For example, the main controller 100 identifies a sample container containing a test solution required for the ion selective electrode cartridge from information of the operation procedures and executes a control operation such as moving the probe 105 to the identified sample container.

Further, the automatic analyzer preferably includes a probe heater 111 arranged in a portion where the probe 105 is attached to the arm 106. The probe heater 111 is maintained at a temperature of 37 degrees C, for example, by a probe heater control circuit 111a. It is desirable that the probe heater control circuit 111a be also provided with a function of sensing a liquid level by detecting electrostatic capacity change between the probe 105 and a ground potential. The function is used for, for example, sensing a liquid level in lowering the probe 105 into a container. A detection signal is transmitted from the probe heater control circuit 111a to the main controller 100.

Besides the above, the automatic analyzer includes a cleaning station 124 arranged on a transportation path for the probe 105. The cleaning station 124 is used for cleaning an inner wall surface and an outer wall surface of the probe 105. While the outer wall surface of the probe 105 is being cleaned, purified water in a water tank 126 is supplied to the cleaning station 124 from a pump unit 125. In this case, the purified water is jetted out from the inner wall of the cleaning station 124. In contrast, while the inner wall surface of the probe 105 is being cleaned, the purified water is supplied, through the suction/discharge unit 127, to the portion to which the probe 105 is attached. The purified water supplied to the probe 105 flows through the probe 105 to be jetted out from a tip end thereof. Note that waste water resulting from the use for the cleaning is automatically discharged to a waste solution tank or the like of the automatic analyzer.

In addition, a display/operation unit 151 used for presenting information and inputting an operation is desirably connected to the automatic analyzer. The display/operation unit 151 includes a LCD (liquid Crystal Display) panel including, for example, a touch panel arranged on a display surface, a start button, and a stop button.

Further, an external printer 153 is desirably connected to the automatic analyzer through a standard interface.

Meanwhile, the reference solution is normally left in a container 303 of an ion selective electrode cartridge 301 after the end of measurement. However, in a case of not frequently performed measurement, before use of an ion cartridge or at the time of storage of the ion cartridge, an ion selective film of the ion selective electrode cartridge 301 is subjected to a dry condition in some cases. Hence, the automatic analyzer may be provided with a mechanism for maintaining the performance of the ion selective electrode cartridge 301 by preventing the ion selective film thereof from becoming dry. For example, the automatic analyzer may be provided with a mechanism for supplying purified water or the like to the container 303 of the ion selective electrode cartridge 301 before measurement. In a specific configuration example, a vacuum pump is activated when the device is turned on or at scheduled timing, which generates a state where the air pressure is lower outside a bottom of the container 303 than inside. This air pressure difference (so-called vacuum drawing) causes the reference solution in the container 303 or a solution remaining therein to be discharged through a discharge hole. Subsequently, the probe 105 is rotationally driven to the position at which the ion selective electrode cartridge 301 is placed. Then, the probe 105 is driven downward until the tip end thereof reaches the inside of the container 303 of the ion selective electrode cartridge, and the purified water of 200 $\mu$L is discharged from the probe 105 into the container 303. Thereafter, the tip end of the probe 105 is withdrawn upward from the container 303 and rotationally driven to an initial position (the housing 120).

(Ion Selective Electrode Unit)

Subsequently, a description is given of a detailed structure of the ion selective electrode unit 123 to which an ion selective electrode cartridge is attached.

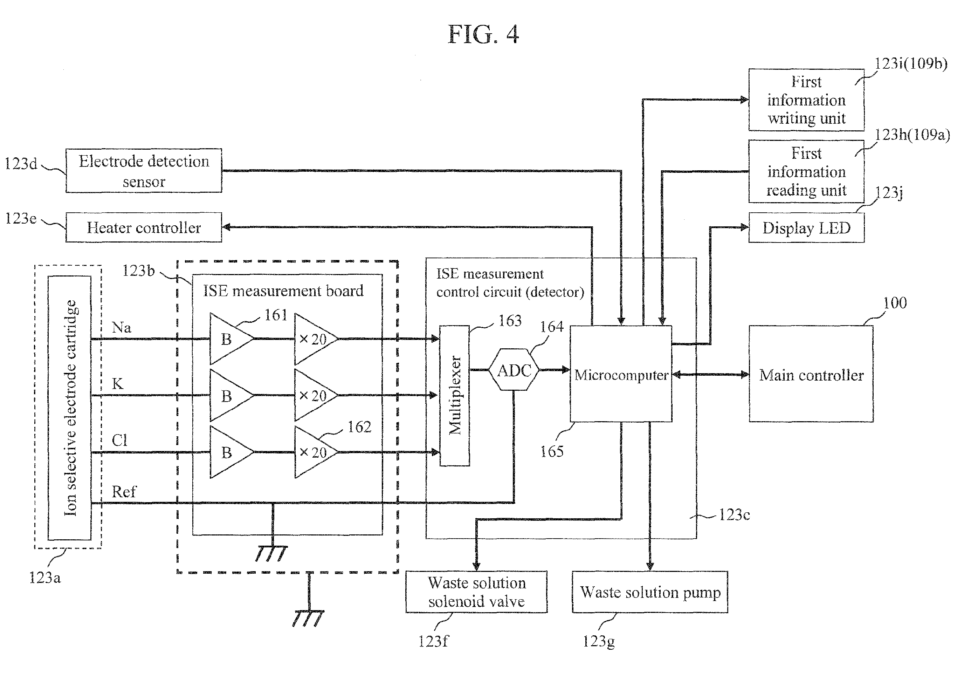

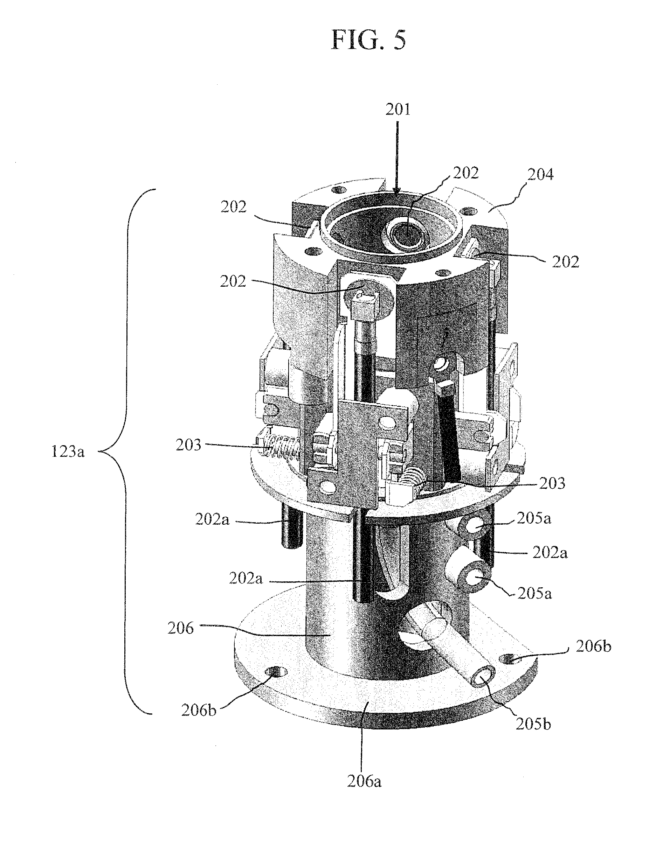

Fig. 4 shows a functional block configuration of the ion selective electrode unit 123, and Fig. 5 shows an exterior structure of the ion selective electrode measurement unit 123a.

The ion selective electrode unit 123 includes the ion selective electrode measurement unit 123a, the ion selective electrode measurement board 123b, the ion selective electrode measurement control circuit 123c, an electrode detection sensor 123d, a heater controller 123e, a waste solution solenoid valve 123f, a waste solution pump 123g, a first information reading unit 123h, a first information writing unit 123i, and a display LED 123j.

The ion selective electrode measurement unit 123a is the electrode cartridge holder detachably holding an ion selective electrode cartridge. For this purpose, a hole 201 having an inner diameter slightly larger than an outer diameter of the ion selective electrode cartridge is formed in the ion selective electrode measurement unit 123a to extend in the vertical direction. Note that the shape of the hole 201 is an exemplary shape of a case where the ion selective electrode cartridge has a cylindrical shape. The hole 201 takes any one of various shapes in accordance with the shape of the ion selective electrode cartridge. The ion selective electrode cartridge is attached to the ion selective electrode measurement unit 123a in such a manner as to be dropped into the hole 201 from the above.

Note that measurement electrodes 202 respectively in electrical contact with the reference electrode and the at least one ion selective electrode which are formed in the ion selective electrode cartridge are arranged in an inner wall portion of the hole 201. For example, when three species of particular ions of sodium ions ($Na^+$), potassium ions ($K^+$), and chloride ions ($Cl^-$) are to be measured, four measurement electrodes 202 are arranged in the inner wall of the hole 201. The measurement electrodes 202 are connected to the ion selective electrode measurement board 123b through respective signal lines 202a.

Further, it is desirable that an attachment structure (for example, a guide or a protrusion) paired with a positioning mechanism formed on the ion selective electrode cartridge side be formed on the inner wall portion of the hole 201. Employing the attachment structure makes it possible to fix the attachment orientation of the ion selective electrode cartridge attached to the hole 201 and to fix correspondence of the reference electrode and ion selective electrodes with respect to the measurement electrodes 202.

In addition, the ion selective electrode measurement unit 123a desirably includes a spring-type attaching/ detaching mechanism 203 so that the ion selective electrode cartridge can be attached detachably. The attaching/detaching mechanism 203 includes, for example, a clamping mechanism, and functions in such a manner as to clamp the ion selective electrode cartridge with a spring.

Besides the above, the ion selective electrode measurement unit 123a desirably has a heat-retaining mechanism 204 (for example, a heater) for keeping constant the temperature of the test solution in the ion selective electrode cartridge in ion concentration measurement. The heat-retaining mechanism 204 is attached to the ion selective electrode measurement unit 123a so as to be capable of heating or cooling the circumference of the container containing the test solution infused therein. In the case of Fig. 5, the heat-retaining mechanism 204 has a ring shape and is arranged in such a manner as to surround an opening in the upper portion of the hole 201. In this embodiment, the heater is set at 39.5 degrees C and the temperature of the ion selective electrode cartridge is controlled at 37 degrees C $\pm$ 2 degrees C.

Further, an exhaust pipe 205a for discarding the solution infused in the container of the ion selective electrode cartridge into the waste solution tank utilizing the vacuum drawing is attached to the ion selective electrode measurement unit 123a. One end of the exhaust pipe 205a is connected to the inside of the hole 201. Note that a discharge pipe 205b for collecting the waste solution is connected to a bottom portion of the waste solution tank. One end of the discharge pipe 205b is connected to the waste solution pump 123g.

Moreover, a pedestal 206a is formed on a main body 206 of the ion selective electrode measurement unit 123a. The ion selective electrode measurement unit 123a is configured such that the ion selective electrode measurement unit 123a can be attached to or detached from a main body of the automatic analyzer through locking or unlocking of locking members with attachment holes 206b. With this configuration, a function of measuring an ion concentration can be added a posteriori to the automatic analyzer having a space allowing attachment of a mechanism for the function.

The ion selective electrode measurement board 123b is a circuit which amplifies a potential appearing on each signal line 202a electrically connected to the corresponding ion selective electrode. Thus, a buffer amplifier 161 and an amplification amplifier (for example, 20-times amplifier) 162 are connected to the signal line 202a in series. Note that the signal line 202a connected to the measurement electrode 202 for the reference electrode is grounded. In addition, the ion selective electrode measurement board 123b is shielded and set at a ground potential so as to obtain high impedance. Moreover, a coaxial cable is used for the signal line 202a.

The ion selective electrode measurement control circuit 123c is a circuit which calculates an ion concentration by taking an electromotive force appearing between each ion selective electrode and the reference electrode. In this embodiment, the ion selective electrode measurement control circuit 123c includes a multiplexer 163, an analog to digital converter (ADC) 164, and a microcomputer 165. Note that the multiplexer 163 functions as a selector configured to selectively output one of electromotive forces appearing on multiple ion selective electrodes. The analog to digital converter (ADC) 164 is a circuit which converts the electromotive force appearing between the reference electrode and the ion selective electrode into digital data. The microcomputer 165 calculates the concentrations of particular ions to be measured on the basis of the serially measured electromotive forces and electrode slope values Slope specific to the ion selective electrodes read from the first information reading unit 123h (corresponding to the first information reading unit 109a in Fig. 2). To calculate each of the ion concentrations, the following formula is used.

$$C_{Samp} = C_{ref} \times 10^{\wedge}\{(E_{Samp} - E_{ref})/Slope\} \qquad \ldots \text{(Formula 2)}$$

Note that $C_{Samp}$ is the concentration of particular ions to be measured. $C_{ref}$ is the concentration of the reference solution (the solution contained in the reagent cartridge). Incidentally, a concentration value read from, for example, the second information presenting unit of the reagent cartridge by the second information reading unit 104 is used as the concentration of the reference solution for the particular ions to be measured. Note that the concentration of the reference solution is desirably set at a median of a particular ion measurement range.

$E_{Samp}$ is an average value of an electromotive force measured for the particular ions when the test solution is infused in the predetermined portion (container) of the ion selective electrode cartridge. Further, $E_{REF}$ is an average value of an electromotive force measured for the particular ions when the reference solution is infused in the predetermined portion (container) of the ion selective electrode cartridge. In this embodiment, six electromotive force measurements are executed for each species of the particular ions, and average values are $E_{Samp}$ and $E_{REF}$, the average values each being obtained from values not including the maximum value and the minimum value.

The microcomputer 165 notifies the main controller 100 of the calculated ion concentration. The main controller 100 stores the ion concentration in the storage unit 152 in association with the measurement date and time and the specimen ID. In addition, the microcomputer 165 has functions of automatically updating the use times or the like of the ion selective electrode cartridge and of displaying the information on the working life on the display LED 123j. The microcomputer 165 can also display the remaining usable times and remaining usable days on the display LED 123j.

The electrode detection sensor 123d is a sensor device configured to detect whether or not ion selective electrode cartridge is placed in the hole 201 of the ion selective electrode measurement unit 123a. The heat controller 123e is a circuit device configured to control the temperature of the constant-temperature mechanism 204 based on PID control. The waste solution solenoid valve 123f and the waste solution pump 123g are used for discarding the solution from the ion selective electrode measurement unit 123a.

The first information reading unit 123h is used for reading electrode slope values Slope specific to the individual ion selective electrodes and the information on the working life from the first information presenting unit of the ion selective electrode cartridge.

The first information writing unit 123i is used for writing the use times at the current time point, the remaining usable times, and the like of the currently attached ion selective electrode cartridge, to the first information presenting unit of the ion selective electrode cartridge. Even if an operation failure of the current automatic analyzer causes the ion selective electrode cartridge to be attached to another automatic analyzer to be used therein, the presence of the writing function makes it possible to continue the management of the use times. The function is not only effective to ensure the reliability of the ion concentration to be measured but also economical in that the ion selective electrode cartridge can be used up to the end of the product life thereof.

The display LED 123j is used for displaying the use times of the ion selective electrode cartridge at the current time point and the like. Note that the display/operation unit 151 connected to the main controller 100 may also be used for displaying the use times and the like.

(Ion Selective electrode Cartridge)

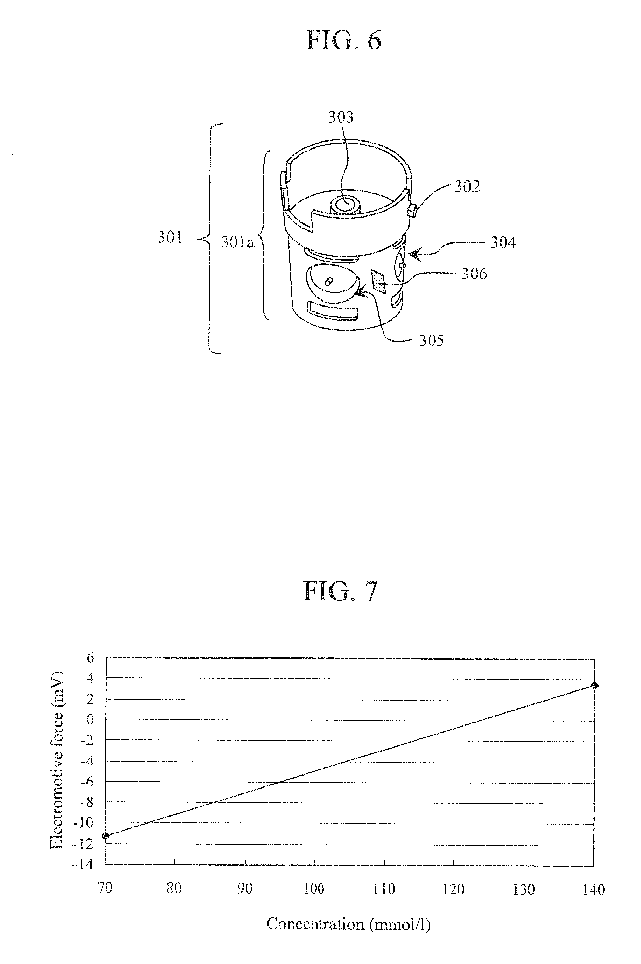

Fig. 6 shows a configuration example of the ion selective electrode cartridge 301 used in the embodiment. Fig. 6 shows an example in which a first information presenting unit 306 storing therein the electrode slope value Slope specific to an ion selective electrode 305 and information on the working life of the ion selective electrode 305 is attached to a casing 301a of the ion selective cartridge 301. Note that the first information presenting unit 306 may be attached to a portion other than the casing 301a.

An electrode slope value Slope is a slope representing a correspondence between an ion concentration and electrode output, that is, a slope of a relational expression (a log-linear equation) between the ion concentration and an electromotive force, and is obtained in advance by using the following method. Fig. 7 shows a measurement example of electrode slope values Slope of sodium ions ($Na^+$). The horizontal axis in Fig. 7 represents a concentration (ion concentration), the vertical axis represents an electromotive force, and the slope of the line represents an electrode slope value Slope. The ion selective electrode 305 which is used for ion concentration measurement necessarily has an individual difference. Thus, the following steps are performed before the ion selective electrode cartridge 301 is shipped as a product. Specifically, electromotive forces $E_H$ and $E_L$ each generated between a reference electrode 304 and the ion selective electrode 305 are measured respectively for a high-concentration reference solution $C_H$ and a low-concentration reference solution $C_L$. Then, an electrode slope value Slope of an internal electrode to be used for particular ion concentration measurement is calculated based on the following formula.

$$\text{Slope} = (E_H - E_L)/\text{Log}(C_H/C_L) \qquad \dots \text{(Formula 3)}$$

Note that the above formula can be derived from the Nernst equation.

This embodiment assumes that, within a guaranteed working life, the electrode slope value Slope does not change or change is negligibly small, if any.

Beside the above, the container 303 into which a test solution is infused is arranged to extend along the center axis of the substantially cylindrical casing 301a of the ion selective electrode cartridge 301. A bottom of the container 303 is formed into a mortar shape from an effective cleaning viewpoint. The inclination angle of the mortar shape is preferably 95 degrees to 135 degrees, more preferably 100 degrees to 120 degrees, and still more preferably 100 degrees to 110 degrees. This embodiment uses the container 303 having a mortar shape with an inclination angle of 105 degrees in the bottom. The discharge hole is formed in the bottom of the container 303 so that the remaining solution or the reference solution which are infused therein can be forcedly discharged.

In addition, a positioning mechanism 302 for the reference electrode 304 is formed on the casing 301a of the ion selective cartridge 301. Note that the attachment structure (for example, a guide) paired with the positioning mechanism 302 is formed on the automatic analyzer side. The paired positioning mechanism and the attachment structure cause the ion selective electrode cartridge 301 to be always attached to the automatic analyzer in a specific positional relationship.

(Reagent Cartridge)

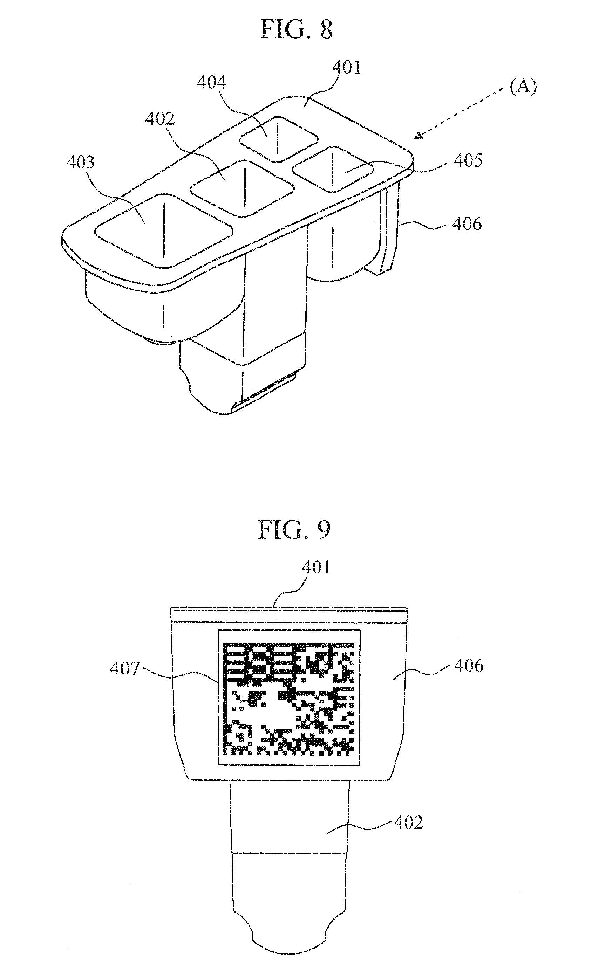

Fig. 8 shows an exterior example of a reagent cartridge. In this embodiment, a reagent cartridge having a structure in which four cuvets 402, 403, 404, and 405 are formed by integral molding is used as a reagent cartridge 401. Specifically, the cuvet 402 is used for discarding a test solution (a test solution derived from any of blood, urine, soil, and water, for example) after ion concentration measurement. The cuvet 403 is used for storing a solution (hereinafter, referred to as a "diluent") used for diluting the test solution. The cuvet 404 is used for storing a reference solution. Alternatively, depending on a liquid amount of the diluent or the reference solution, the cuvet 403 can be used for storing the reference solution, the cuvet 402 can be used for storing the diluent or the reference solution, and the cuvet 404 can be used for discarding the test solution after the ion concentration measurement.

In addition, depending on the number of reagents, a structure in which the cuvet 404 and the cuvet 405 are connected with each other or a structure in which the cuvet 403 is divided into two reagent vessels can also be used for each reagent cartridge.

The second information presenting unit illustrated in Fig. 9 is arranged on a back panel 406 of the reagent cartridge 401. In the case of Fig. 9, the second information presenting unit is a two-dimensional barcode 407. As described above, the two-dimensional barcode 407 stores therein the lot number, the manufacturing date, the use limit, the type of a reference solution, a concentration value of the reference solution, and the like which are encoded.

(Measurement Targets)

Examples of the particular ions suitable for the ion concentration measurement using the automatic analyzer of the present invention include sodium ions ($Na^+$), potassium ions ($K^+$), chloride ions ($Cl^-$), calcium ions ($Ca^{2+}$), magnesium ions ($Mg^{2+}$), bicarbonate ions ($HCO_3^-$), lithium ions ($Li^+$), zinc ions ($Zn^{2+}$), copper ions ($Cu^{2+}$), iron ions ($Fe^{2+}$, $Fe^{3+}$), and the like. Examples of the test solution include a solution derived from any of blood, urine, soil, and water, and the like.

(Operation of Measuring Ion Concentration)

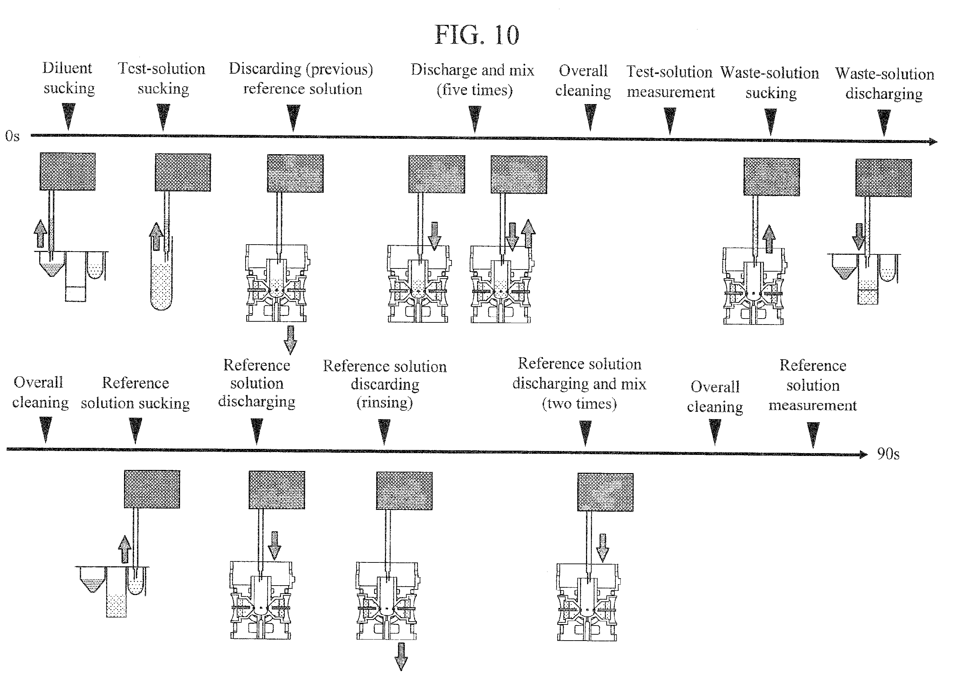

Next, an example of an operation of measuring an ion concentration executed by the automatic analyzer of the present invention will be described by using Fig. 10. However, the automatic analyzer of the present invention can be used for an application other than the ion concentration measurement of the test solution. For example, the automatic analyzer can be used for an application in which protein, glucose, uric acid, and the like contained in a test solution infused in a light-transmissive reagent cartridge is optically analyzed. Thus, the operation of measuring an ion concentration shown below is an example of an analysis operation executable by using the automatic analyzer of the present invention.

Firstly, a turning-on operation is performed on a main power switch of the automatic analyzer. Next, a sample container containing a test solution is placed at a position of any of the sample container holders 121a to 121d. Note that the number of the sample containers which can be simultaneously placed is four. When the sample container is placed, placement of a new reagent cartridge 401 or discarding of an already used reagent cartridge 401 is executed as necessary. In addition, an operation of replacing the ion selective electrode cartridge 301 with another one is executed as necessary, although the frequency thereof is much less than that of the above operations.

When a case for protecting the rotor 101 and the probe 105 is closed after the end of these operations, the automatic analyzer is ready for ion concentration measurement. The following description is given on the assumption that the concentrations of three species of sodium ions ($Na^+$), potassium ions ($K^+$), and chloride ions ($Cl^-$) are simultaneously measured in a single test solution at a time. In addition, operations of the units to be described later are achieved through control by the main controller 100 and the ion selective electrode measurement control circuit 123c.

When the automatic analyzer is ready for the ion concentration measurement, a series of measurement operations are started automatically or based on a test start instruction given by an operator.

Firstly, an operation of sucking a diluent to put the diluent into the probe 105 is started. Upon start of measurement operation, the microcomputer 165 increments the use times of the ion selective electrode cartridge 301 by one. The microcomputer 165 accesses the first information presenting unit 306 of the ion selective electrode cartridge 301 through the first information writing unit 123i to update the use times in the first information presenting unit 306.

In parallel with this operation, the probe 105 is rotationally driven to a position for sucking the diluent. At the same time, the rotor 101 is rotationally driven so that a particular or any reagent cartridge 401 is moved to the position for sucking the diluent. Then, the probe 105 is driven downward, and the tip end thereof penetrates a film covering a surface of the cuvet 403 to reach the diluent. At this time, the probe 105 sucks the diluent of 100 microliters, for example. Thereafter, the tip end of the probe 105 is drawn back from the diluent. The operation of drawing back the probe 105 is continued until the probe 105 reaches a rotatable position.

Next, the automatic analyzer proceeds to a test-solution sucking step. The probe 105 is rotationally driven to a position where the test solution is stored. Note that relationships between the test-solution storage position and the sample container holders 121a to 12 1 d are provided for the main controller 100 in advance. Concerning how the main controller 100 obtains the storage position, the following method and the like are conceivable. Specifically, the storage position is set and inputted by the operator or read from a barcode printed on a surface of a sample container by using an unillustrated barcode reader.

Upon completion of the positioning, the probe 105 is driven downward until the tip end thereof reaches the test solution. At this time, the probe 105 sucks the test solution of 10 microliters, for example. However, directly sucking the test solution causes the previously sucked diluent and the newly sucked test solution to contact with each other in the probe 105. In other words, the solutions are mixed with each other in the probe 105. Hence, air of only 4 microliters is sucked before the sucking of the test solution is started. With this sucking, an air layer exists between the test solution and the diluent, and direct contact between the liquid levels can be avoided. Thereafter, the tip end of the probe 105 is drawn back from the test solution. The operation of drawing back the probe 105 is continued until the probe 105 reaches the rotatable position.

Next, the automatic analyzer proceeds to a reference-solution discarding step. At this time, a reference solution is a reference solution remaining from the previous measurement. Then, the vacuum pump is activated, which generates the state where the air pressure is lower outside the bottom of the container 303 than inside. This air pressure difference (so-called vacuum drawing) causes the reference solution remaining from the previous measurement in the container 303 to be discharged through the discharge hole.

After the end of the reference-solution discarding step, the process moves to a test-solution diluting step. At this time, the probe 105 is rotationally driven to a position at which the ion selective electrode cartridge 301 is attached. Subsequently, the probe 105 is driven downward until a tip end thereof reaches the inside of the container 303 of the ion selective electrode cartridge 301. Thereafter, the test solution of 10 microliters and the diluent of 100 microleters are discharged from the probe 105. At this time, the sucking and discharging a mixed solution (diluted test solution) are repeated certain times by using the probe to mix the test solution and the diluent together well. Then, the tip end of the probe 105 is drawn back from the container 303.

After the probe 105 is drawn back, a cleaning step is executed. The probe 105 is moved up to a position of a cleaning station 124. In the cleaning step, both an outer wall surface of the probe 105 and the inside thereof are cleaned with purified water. A waste solution in this step contains components of the test solution, but an amount of the test solution with respect to the purified water is extremely small. There is no concern about environmental pollution.

After the end of or in such a manner as to be parallel with the cleaning step, measurement of concentrations of ions contained in the mixed solution is started. Note that the ion concentration measurement is preferably started at a predetermined time (for example, 30 seconds) after the end of an operation of stirring the mixed solution. This is because ion concentration measurement values are not stable immediately after the end of the stirring operation in some cases. Note that when multiple ion selective electrodes 305 are formed in the ion selective electrode cartridge 301, the ion concentration measurement is executed for each ion selective electrode 305.

For example, an electromotive force appearing between the reference electrode 304 and each ion selective electrode 305 for sodium ions ($Na^+$), potassium ions ($K^+$), or chloride ions ($Cl^-$) is measured. When the multiple ion concentrations are measured as described above, the measurements may be performed in turn, but it is preferable that all the electromotive forces be simultaneously measured in consideration of a variation or the like of a measurement environment.

It is desirable that each measurement of the corresponding electromotive force be repeated multiple times and that an average value $E_{Samp}$ thereof be used as a measurement result. For example, six electromotive force measurements are executed for each ion species, and an average value $E_{Samp}$ of values not including the maximum value and the minimum value is used as a measurement result. The measurement result is held until a measurement result of the reference solution to be described later is obtained.

After the end of the test-solution measuring step, the process moves to a discarding step. In this step, the probe 105 is driven downward until the tip end thereof reaches the inside of the container 303 of the ion selective electrode cartridge 301. Then, all of the mixed solution (diluted test solution) in the container 303 is sucked into the probe.

Upon completion of the sucking of the mixed solution (diluted test solution), the probe 105 is drawn back to the rotatable position. Then, the probe 105 is driven to a discarding position with respect to the reagent cartridge 401. In this embodiment, the cuvet 402 is located at the discarding position. It goes without saying that the rotor 101 is also rotationally driven to a position where the cuvet 402 meets a trajectory of the probe 105.

Upon completion of the positioning, the probe 105 is driven downward until the tip end thereof penetrates a film covering a surface of the cuvet 402. In this state, the mixed solution (diluted test solution) is discarded from the probe 105 into the empty cuvet 402. As described above, the mixed solution is discarded into a space completely separated from a discharge path. Note that the film hermetically covers an opening of the cuvet 402 into which the mixed solution is discarded. This considerably reduces a concern about liquid leakage in the course of discarding. The discarding technique is particularly effective to a case of handling a test solution imposing a high environmental load. After the end of discarding the mixed solution in the probe 105, the probe 105 is drawn back to the rotatable position.

Thereafter, the probe 105 is rotationally driven to a position of the cleaning station 124. Also in the case of this time cleaning step, both the outer wall surface and the inner wall surface of the probe 105 are cleaned with purified water. A waste solution contains components of the mixed solution, but an amount of the components is extremely small relative to a water amount of the purified water. There is no concern about the environmental pollution.

Next, an ion-concentration measurement step using a reference solution (that is, an ion-concentration measurement-value calibration step) is started. At this time, the probe 105 is rotationally driven to a position for sucking the reference solution. Specifically, the probe 105 is driven to a position where the trajectory of the probe 105 and a trajectory of the cuvet 404 meet with each other. It goes without saying that the reagent cartridge 401 is also positioned due to rotational driving of the rotor 101.

Upon completion of the positioning, the probe 105 is driven downward until the tip end thereof reaches the reference solution. At this time, the probe 105 sucks the reference solution of 305 microliters, for example. Next, the probe 105 is rotationally driven to a position where the ion selective electrode cartridge 301 is placed. Thereafter, the probe 105 is driven downward until the tip end thereof reaches the inside of the container 303 of the ion selective electrode cartridge.

Subsequently, the reference solution of 110 microliters is discharged from the probe 105 into the container 303. The reference solution is used for rinsing the container 303 contaminated with the mixed solution. Note that the vacuum pump is activated upon infusion of a predetermined amount of the reference solution, which causes a state in which the air pressure is lower outside a bottom of the container 303 than inside. This air pressure difference (so-called vacuum drawing) causes the reference solution to be discharged through the discharge hole of the container 303. This waste solution also contains components of the mixed solution, but an amount of the components is extremely small relative to a water amount of the purified water. There is no concern about the environmental pollution.

After the end of the discarding step (rising step) of the reference solution, the reference solution of 100 microleters left in the probe 105 is discharged into the container 303. That is, a second reference-solution discharging step is executed. At this time, there is a slight temperature difference between the very small amount of reference solution left in the container 303 and the reference solution in the probe. Sucking and discharging the reference solution are repeated certain times by using the probe 105 to eliminate the temperature difference.

Thereafter, the tip end of the probe 105 is withdrawn upward from the container 303. Note that the ion concentration measurement of the reference solution is started at a predetermined time (for example, 30 seconds) after the end of an operation of stirring the reference solution. This is because ion concentration measurement values are not stable immediately after the end of the stirring operation in some cases.

The time period is utilized to execute a probe 105 cleaning step. At this time, the probe 105 is rotationally driven to the position of the cleaning station 124. Here, both the outer wall surface of the probe 105 and the inside thereof are cleaned with purified water. After the completion of the cleaning, the probe 105 is rotationally driven to an initial position (housing 120).

After the elapse of the predetermined time (for example, 30 seconds) from the end of the reference solution stirring, the ion concentration measurement of the reference solution is started. When the multiple ion selective electrodes 305 are formed in the ion selective electrode cartridge 301, the ion concentration measurement is executed for each ion selective electrode 305. For example, an electromotive force appearing between the reference electrode 304 and each corresponding ion selective electrode 305 for sodium ions ($Na^+$), potassium ions ($K^+$), or chloride ions ($Cl^-$) is preferably measured at the same time.

Each electromotive force measurement is executed under the same condition as that for the measurement of the test solution. Thus, it is desirable that each measurement of the corresponding electromotive force for each ion species be repeated multiple times and that an average value $E_{REF}$ thereof be used as a measurement result. For example, six electromotive force measurements are executed for each ion species, and an average value $E_{REF}$ of values not including the maximum value and the minimum value is used as a measurement result.

The operation described above results in all the measurement values required to calculate the ion concentrations in the test solution. Subsequently, the automatic analyzer calculates each concentration value of the particular ions in the test solution based on Formula 3. Specifically, in order to correct an error due to so-called an intercept variation due to occurrence of a drift of the electrode electromotive force, the concentration value of the particular ions existing in the test solution is calculated from: the electromotive force measured for the particular ions in the reference solution; the electromotive force measured for the particular ions in the test solution; and the electrode Slope value held by the ion selective electrode 305 used for the measurement.

Thus, the operation of measuring the particular ions in the single test solution is completed. The same measurement operation is also executed for a different test solution, as necessary.

(Conclusion)

As described above, in the case of the automatic analyzer according to this embodiment, the electrode slope value Slope of each ion selective electrode 305 from the first information presenting unit 306 of the ion selective electrode cartridge 301 can be read, and the ion concentration measurement can be started without executing a calibration. Thus, it is possible to reduce a measurement time period per specimen by a calibration time period in comparison with a conventional device. In addition, the electrode slope value Slope is herein an actually beforehand measured electrode slope value Slope specific to the ion selective electrode 305 to be used actually. Thus, the ion concentration can be calculated correctly. Moreover, in a case where the information on change of the electrode slope value Slope can be read from the first information presenting unit 306, the correct ion concentration can be calculated by using a corrected electrode slope value Slope even in a case where the electrode slope value Slope changes within the working life of the ion selective electrode 305.

Besides, in the case of the automatic analyzer according to this embodiment, the automatic analyzer can directly read the information on the working life of each ion selective electrode cartridge 301 from the first information presenting unit 306 of the ion selective electrode cartridge 301 and thus can achieve management of the working life of the ion selective electrode cartridge 301. For example, the use times or period of the ion selective electrode cartridge 301 can be managed so as not exceed a usable times or period provided as the working life.

Moreover, in the case of the automatic analyzer according to this embodiment, the use times or the use start date and time of the ion selective electrode cartridge 301 for ion concentration measurement can be written to the first information presenting unit 306, and the working life of the ion selective electrode cartridge 301 can be managed reliably even in a case where the single ion selective electrode cartridge 301 is used for multiple automatic analyzers. Further, also in a case where the multiple automatic analyzers use common ion selective electrode cartridges, unnecessary discarding of an ion selective electrode cartridge which has not reached the working life yet can be eliminated while the reliability of a measurement result is maintained.

Still further, in the case of the automatic analyzer according to this embodiment, the attachment structure paired with the positioning mechanism provided on the ion selective electrode cartridge 301 is provided, and thereby the ion concentration can be measured in an appropriate positional relationship. That is, the correspondence between each ion selective electrode and a corresponding electrode slope value can be ensured. With the employment of these mechanisms, it is possible to identify the correspondence of the electrode slope value to be applied to an electromotive force and to enhance the reliability of the calculated ion concentration.

Yet further, as described above, an intercept to which an electrode slope value Slope is applied is corrected by using a reference solution every predetermined number of measurements, and thereby a measurement error due to a variation of the intercept can be eliminated.

In addition, the constant-temperature mechanism (heater) configured to keep constant the temperature of the attached ion selective electrode cartridge 301 is provided, and thereby the ion concentration measurement environment can be stabilized.

(Other Embodiment)

A description is given below of an example of a modification of the aforementioned embodiment.

(Real-time Calibration Function Using Reference Solution)

The description has been given that use of an electrode slope value Slope calculated based on Formula 2 enables calculation of a concentration value of particular ions. The electrode slope value Slope may be stored in the IC tag 111 in advance as described above. However, an electrode slope value Slope may be calculated every measurement.

A description is given below of an operation example in a case of calculating the electrode slope value Slope every measurement (that is, a case of calibrating the electrode slope value Slope in real time).

Firstly, a diluent of a specimen and a reference solution to be used for measurement are mixed with each other in the automatic analyzer at the beginning of the measurement so that mixing ratio therebetween can be 1 to 2. A reference solution (a low-concentration reference solution $C_L$) having a 2/3 concentration of the original concentration is thereby generated, and an electromotive force is measured at an electrode. Next, an electromotive force is measured in an undiluted reference solution (a high-concentration reference solution $C_H$). Thereafter, an ion concentration difference and an electromotive force difference between these reference solutions are substituted in the slope calculation equation (Formula 1) to measure an electrode slope value Slope. Specifically, the calculation is made in accordance with the following equation.

$$\text{Slope} = (E_S - E_{(2/3)S})/\text{Log}(C_S/C_{(2/3S)}) \qquad \ldots \text{(Formula 4)}$$

Here, $E_S$ is the electromotive force of the original reference solution, and $E_{(2/3)S}$ is the electromotive force of the reference solution having the 2/3 concentration. In addition, $C_S$ is any of ion concentrations (Na, K, and Cl) of the original reference solution, and $C_{(2/3)s}$ is any of the ion concentrations of the reference solution diluted by 2/3 times.

The calculated slope value Slope is a slope at the time of measurement (in real time). After the calculation of the slope value Slope, the ion selective electrode measurement control circuit 123c substitutes the slope value Slope, the electromotive force measured for each of specimens, and an electromotive force of the reference solution in (Formula 2) to measure the concentration.

(Function of Self-checking Electrode Deterioration)

Subsequently, a description is given of a processing function for self-checking deterioration of an electrode.

Processing of this self-checking function is also started by calculating an electrode slope value Slope before each measurement, like the real-time calculation of the electrode slope value Slope.

Firstly, a diluent of a specimen and a reference solution to be used for measurement are mixed with each other in the automatic analyzer at the beginning of the measurement so that mixing ratio therebetween can be 1 to 2. A reference solution (a low-concentration reference solution $C_L$) having a 2/3 concentration of the original concentration is thereby generated, and an electromotive force is measured at an electrode. Next, an electromotive force is measured in a reference solution (a high-concentration reference solution $C_H$). Thereafter, an ion concentration difference and an electromotive force difference between these reference solutions are substituted in the slope calculation equation (Formula 3) to calculate an electrode slope value Slope.

At this point, the ion selective electrode measurement control circuit 123c determines whether or not the electrode is usable by comparing the electrode slope value Slope calculated (measured) prior to ion concentration measurement with a stored value which is stored as a slope value of a corresponding electrode in the IC tag 111. For example, a small difference between the calculated value (measured value) and the stored value means that the electrode is usable, while a large difference means that an error will occur in a measurement value. When the electrode slope is automatically measured every ion concentration measurement even within the usable period originally provided, a daily electrode state can thereby be self-checked. Table 1 below shows an example of slope change. Table 1 represents slope values measured by using the above method after concentrations are measured 150 times. Note that a reference solution in Table 1 corresponds to the high-concentration reference solution $C_H$, and a 2/3 reference solution corresponds to the low-concentration reference solution $C_L$. Table 1 is an example of a case where the ion selective electrode measurement control circuit 123c determines whether or not each electrode is usable based on a range of a usable slope value instead of a particular reference value (stored value).

[Table 1]

|  | Na | K | Cl |
|---|---|---|---|
| Potential in reference solution (mV) | 35.447 | 66.492 | 61.998 |
| Potential in 2/3 reference solution (mV) | 22.247 | 53.769 | 70.200 |
| Electrode slope value calculated during measurement (actual slope value after measuring 150 specimens) | 75 | 72 | -47 |
| Initial slope value | 56 | 57 | -50 |
| Slope value criteria | 40 to 70 | 40 to 70 | -40 to -70 |

Table 1 shows that the slope values have changed due to deterioration of the electrodes. For example, in the case of the electrode for Na ions, the slope value changes from 56 of the initial value to 75. Note that the criterion of the slope value which means the electrode is usable is 40 to 70. Thus, it is shown that the working life of the electrode for the Na ions in Table 1 has already exceeded the end thereof. The automatic analyzer is provided with this function, and thereby the electrode deterioration can be self-checked.

(Variation (Drift) Correction)

Lastly, a description is given of a function of automatically correcting a potential variation. As described above, a potential is not stable depending on the electrode, and the potential is increased or decreased with the elapse of time. Hence, potentials in the reference solution are measured before and after a potential in a sample is measured, and an average value of the potentials of the reference solution is automatically obtained by the ion selective electrode measurement control circuit 123c. That is, the average of the potentials is calculated, so that a potential variation (drift) is taken into consideration (corrected). Thereby, the accuracy of the ion concentration calculation based on Formula 2 is improved.

[Table 2]

|  | Na | K | Cl |
|---|---|---|---|
| Electrode slope value | 55 | 55 | -52 |
| Potential at specimen (mV) | 34.181 | 65.317 | 64.668 |
| Potential in reference solution (mV) | 36.393 | 66.904 | 66.516 |
| Concentration (mmol/L) | 131.3 | 4.68 | 104.1 |
| Potential in reference solution after drift correction(mV) | 34.181 | 66.923 | 66.252 |
| Concentration after drift correction (mmol/L) | 144.0 | 4.67 | 102.9 |
| Certified value (mmol/L) | $141.5 \pm 0.3$ | $4.46 \pm 0.03$ | $103.1 \pm 0.6$ |
| Difference from certified value | -10.2 | +0.22 | +1.0 |
| Difference from certified value after drift correction | +2.5 | +0.21 | -0.2 |

Note that the results in Fig. 2 are results obtained by using a certified practical standard material for an ion electrode, medium-concentration ISE CRS-N (produced by SEKISUI MEDICAL Co., Ltd.). Performing the drift correction results in values closer to the certified values and shows an effect.

EXPLANATION OF THE REFERENCE NUMERALS

100 ... main controller (controller, information processing unit, and computing unit), 101 ... rotor, 102 ... stepping motor (rotor driving unit), 102a ... rotor control circuit (rotor driving unit), 103 ... reagent cartridge holder, 104 ... second information reading unit, 105 ... probe, 106 ... arm (probe driving unit), 107, 108 ... stepping motor (probe driving unit), 107a ... arm vertical control circuit (probe driving unit), 108a ... arm rotation control circuit (probe driving unit), 109a ... first information reading unit, 109b ... first information writing unit, 121a to 121d ... sample container holder, 123 ... ion selective electrode unit, 123a ... ion selective electrode measurement unit (electrode cartridge holder), 123b ... ion selective electrode measurement board (detector), 123c ... ion selective electrode measurement control circuit (detector, information processing unit, and computing unit), 123d ... electrode detection sensor, 123e ... heater controller, 123f ... waste solution solenoid valve, 123g ... waste solution pump, 123h ... first information reading unit, 123i ... first information writing unit, 123j ... display LED, 152 ... storage unit, 201 ... hole, 202 ... measurement electrode, 202a ... signal line, 203 ... attaching/detaching mechanism, 204 ... constant-temperature mechanism, 205a ... exhaust pipe, 205b ... discharge pipe, 206 ... main body, 206a ... pedestal, 206b ... attachment hole, 301 ... ion selective electrode cartridge, 302 ... positioning mechanism (electrode positioning mechanism), 303 ... container, 304 ... reference electrode, 305 ... ion selective electrode, 306 ... first information presenting unit, 401 ... reagent cartridge, 402 to 405 ... cuvet, 406 ... back panel, 407 ... two-dimensional barcode (second information presenting unit)

**Claims**

1. An automatic analyzer, comprising:

   sample container holders holding a plurality of sample containers which are respectively placed at different positions and are respectively assigned to different test solutions;
   a rotor capable of rotating while holding a plurality of reagent cartridges;
   a rotor driving unit configured to rotationally drive the rotor;

a single probe capable of sucking or discharging a liquid;

a probe driving unit configured to drive the probe;

an electrode cartridge holder holding an ion selective electrode cartridge within a movable range of the probe, the ion selective electrode cartridge comprising a reference electrode, at least one ion selective electrode, and a first information presenting unit storing therein an electrode slope value specific to the ion selective electrode;

a first information reading unit configured to read information stored in the first information presenting unit;

a storage unit configured to store therein the information read by the first information reading unit;

a detector configured to detect an electromotive force appearing between the ion selective electrode of interest and the reference electrode after one of the test solutions is infused in a predetermined portion of the ion selective electrode cartridge;

an information processing unit configured to calculate a concentration of particular ions in the test solution by using the electromotive force detected by the detector and the electrode slope value; and

a controller configured to control the units of the analyzer.

2. The automatic analyzer according to claim 1, wherein the information processing unit corrects the electrode slope value every predetermined number of measurements based on a percentage change of the electrode slope value read from the first information presenting unit through the first information reading unit.

3. The automatic analyzer according to any one of claims 1 and 2, further comprising a computing unit configured to count use times or use days of the ion selective electrode cartridge every time any of the test solutions is infused in the predetermined portion of the ion selective electrode cartridge from a corresponding one of the sample containers, wherein

the computing unit determines whether or not the ion selective electrode cartridge can be used for ion concentration measurement based on either the use times or the use days and information on a working life read from the first information presenting unit through the first information reading unit.

4. The automatic analyzer according to any one of claims 1 to 3, comprising a first information writing unit configured to write information on any one of a use start date, the use times, and the use days to the first information presenting unit of the ion selective electrode cartridge.

5. The automatic analyzer according to any one of claims 1 to 4, wherein the electrode cartridge holder comprises an attaching and detaching mechanism for the ion selective electrode cartridge and detachably holds the ion selective electrode cartridge.

6. The automatic analyzer according to claim 5, wherein the attaching and detaching mechanism is a spring-type mechanism.

7. The automatic analyzer according to any one of claims 1 to 6, wherein the electrode cartridge holder has an attaching structure paired with an electrode positioning mechanism of the ion selective electrode cartridge.

8. The automatic analyzer according to any one of claims 1 to 7, wherein the electrode cartridge holder comprises a constant-temperature mechanism configured to keep constant a temperature of the ion selective electrode cartridge.

9. The automatic analyzer according to any one of claims 1 to 8, wherein the controller controls the probe driving unit so that the probe is positioned in a container of the ion selective electrode cartridge and is caused to perform at least any one of operations of infusing, sucking, and discarding the test solution.

10. The automatic analyzer according to any one of claims 1 to 9, wherein each of the reagent cartridges comprises a second information presenting unit, and the automatic analyzer further comprises a second information reading unit configured to read information stored in the second information presenting unit.

11. The automatic analyzer according to claim 10, wherein the controller identifies one of the sample containers which contains the test solution required for the ion selective electrode cartridge by referring to the information read from the second information presenting unit through the second information reading unit, and controls the probe driving unit so as to position the probe in the identified sample container.

FIG. 1

# FIG. 2

→ : Electrical control

▬▬▬ : Mechanical connection

Commercial AC power source → DC power source unit → DC voltage

| Block | Reference |
|---|---|
| ISE measurement unit | 123 / 123a |
| ISE measurement board | 123b |
| ISE measurement control circuit | 123c |
| Case lock mechanism | |
| Pump unit | 125 |
| Water tank | 126 |
| Rotor | 101 |
| Suction/discharge unit | 127 |
| Arm | 106 |
| Probe | 105 |
| Stepping motor | 102 |
| Suction/discharge motor | 128 |
| Stepping motor | 107 |
| Stepping motor | 108 |
| Probe heater | 111 |
| Rotor control circuit | 102a |
| Suction/discharge control circuit | 128a |
| Arm vertical control circuit | 107a |
| Arm rotation control circuit | 108a |
| Electrostatic capacity | |
| Probe heater control circuit | 111a |

Main controller — 100

Storage unit — 152

Real-time clock

SRAM

Flash memory

EEP ROM

LCD control circuit

RS-232C I/F circuit

Printer I/F circuit

First information reading unit — 109a

First information writing unit — 109b

Second information reading unit — 104

LCD unit

EP 2 479 560 A1

# FIG. 3

Characteristic after correction
by reference solution

Characteristic obtained
by electrode slope value

Electromotive force

Concentration

# FIG. 4

Electrode detection sensor — 123d

Heater controller — 123e

First information writing unit — 123i(109b)

First information reading unit — 123h(109a)

Display LED — 123j

Ion selective electrode cartridge — 123a

123b

ISE measurement board

161
×20

162

ISE measurement control circuit (detector)

163 Multiplexer

164 ADC

165

Microcomputer — 123c

Main controller — 100

Na
K
Cl
Ref

B
B
B

×20
×20
×20

Waste solution solenoid valve — 123f

Waste solution pump — 123g

EP 2 479 560 A1

# FIG. 5

# FIG. 6

# FIG. 7

## FIG. 8

## FIG. 9

# FIG. 10

Diluent sucking | Test-solution sucking | Discarding (previous) reference solution | Discharge and mix (five times) | Overall cleaning | Test-solution measurement | Waste-solution sucking | Waste-solution discharging

0s

Overall cleaning | Reference solution sucking | Reference solution discharging | Reference solution discarding (rinsing) | Reference solution discharging and mix (two times) | Overall cleaning | Reference solution measurement

90s

EP 2 479 560 A1

## INTERNATIONAL SEARCH REPORT

| | International application No. |
|---|---|
| | PCT/JP2010/066198 |

**A. CLASSIFICATION OF SUBJECT MATTER**
*G01N27/26*(2006.01)i, *G01N27/28*(2006.01)i, *G01N27/416*(2006.01)i, *G01N35/04*(2006.01)i

According to International Patent Classification (IPC) or to both national classification and IPC

**B. FIELDS SEARCHED**

Minimum documentation searched (classification system followed by classification symbols)
G01N27/26, G01N27/28, G01N27/416, G01N35/04

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2007-170925 A (Toshiba Corp.), 05 July 2007 (05.07.2007), entire text; all drawings (Family: none) | 1-11 |
| A | JP 2-159548 A (Toshiba Corp.), 19 June 1990 (19.06.1990), entire text; all drawings (Family: none) | 1-11 |
| A | JP 2004-251799 A (Toshiba Corp.), 09 September 2004 (09.09.2004), entire text; all drawings (Family: none) | 1-11 |

☒ Further documents are listed in the continuation of Box C.　　☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 21 October, 2010 (21.10.10) | 02 November, 2010 (02.11.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/066198

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2001-264283 A  (Hitachi, Ltd.),<br>26 September 2001 (26.09.2001),<br>entire text; all drawings<br>(Family: none) | 1-11 |
| A | JP 2008-51620 A  (Toshiba Corp.),<br>06 March 2008 (06.03.2008),<br>entire text; all drawings<br>(Family: none) | 1-11 |

Form PCT/ISA/210 (continuation of second sheet) (July 2009)

**EP 2 479 560 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI2159548 B
- JP 2004251799 A
- JP 2001264283 A
- JP 2008051620 A